# EUROPEAN PATENT APPLICATION

(11) **EP 3 392 935 A1**
(43) Date of publication of application: **24.10.2018**
(21) Application number: 16875347.3
(22) Date of filing: 22.11.2016
(51) Int. Cl.: H01M 4/485, C01G 51/00

(54) **PLATE-SHAPED LITHIUM COMPOSITE OXIDE, AND METHOD FOR MANUFACTURING SAME**

(30) Priority: 18.12.2015 JP 2015247032
(71) Applicant: NGK Insulators, Ltd., Nagoya-shi, Aichi 467-8530 (JP)
(72) Inventor: YURA Yukinobu, Nagoya-shi Aichi 467-8530 (JP); OKADA Shigeki, Nagoya-shi Aichi 467-8530 (JP)
(74) Representative: Müller-Boré & Partner Patentanwälte PartG mbB
(86) International application number: PCT/JP2016/084642
(87) International publication number: WO 2017/104363

(57) **Abstract**

A positive electrode plate (106) is a plate-shaped lithium composite oxide plate for use of a positive electrode (15) of a lithium ion battery (10) and is composed of a plurality of bound primary particles (20) respectively constituted by a lithium composite oxide having a layered rock-salt structure. The average number of the bound primary particles (20) disposed in a thickness direction in the positive electrode plate (106) is less than or equal to 6.

## Description

### Technical Field

The present invention relates to a plate-shaped lithium composite oxide, and to a method for manufacturing same.

### Background Art

Typically, it is known to use a plate-shaped lithium composite oxide, which is composed of a plurality of bound primary particles constituted by a lithium composite oxide having a layered rock-salt structure, as the positive electrode of a lithium ion battery (reference is made to Patent Literature 1).

### Prior Art

### Patent Literature

- [Patent Literature 1]: Japanese Patent No. 5043203

### Summary of Invention

In this context, the rate characteristics of a lithium ion battery are effectively increased by reducing the number of primary particles disposed in a thickness direction of the plate-shaped lithium composite oxide to thereby enhance lithium ion conductivity. However, there are difficulties associated with increasing a particle diameter of the primary particles to thereby reduce the number of primary particles disposed in a thickness direction.

The present invention is proposed based on the new insight above, and has the object of providing a plate-shaped lithium composite oxide that enables enhancement of the rate characteristics of a lithium ion battery, and providing a method of manufacturing same.

### Solution to Problem

A plate-shaped lithium composite oxide according to the present invention is composed of a plurality of bound primary particles respectively constituted by a lithium composite oxide having a layered rock-salt structure. The average number of primary particles disposed in a thickness direction that is perpendicular to a plate face is less than or equal to 6.

### Advantageous Effects of Invention

The present invention provides a plate-shaped lithium composite oxide that enables enhancement of the rate characteristics of the lithium ion battery, and a method of manufacturing same.

### Brief Description of Drawings

FIG. 1 is a cross sectional view schematically illustrating a configuration of an all-solid lithium ion battery.
FIG. 2 is an SEM image showing a cross section of a positive electrode plate.

### Description of Embodiments

### All-solid Lithium Ion Battery 100

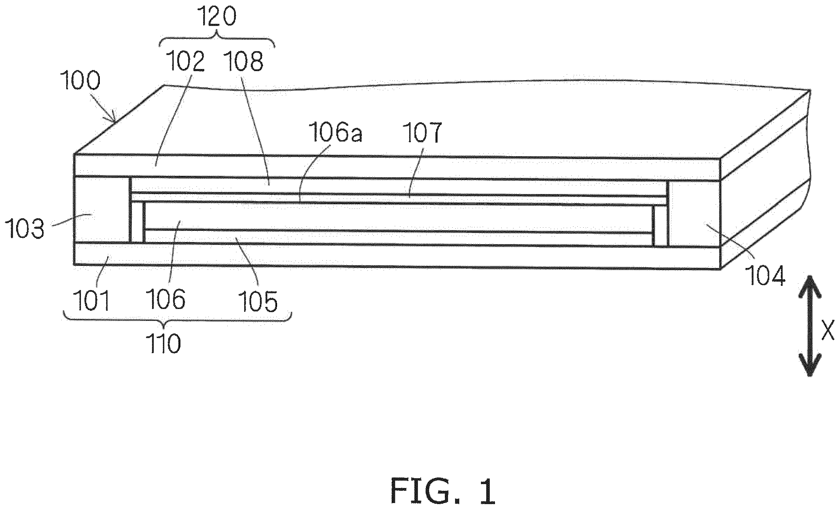

As shown in FIG. 1, a chip-type all-solid lithium battery 100 that is configured as a plate piece is a secondary battery (rechargeable battery) that is capable of repetitive use as a result of charging and discharging.

The all-solid lithium battery 100 comprises a positive electrode-side current collecting layer 101, a negative electrode-side current collecting layer 102, outer cladding 103, 104, a current collecting connection layer 105, a positive electrode plate 106, a solid electrolyte layer 107 and a negative electrode layer 108. The all-solid lithium ion battery 100 has a configuration in which the positive electrode-side current collecting layer 101, the current collecting connection layer 105, the positive electrode plate 106, the solid electrolyte layer 107, the negative electrode layer 108 and the negative electrode-side current collecting layer 102 are sequentially stacked in a stacking direction X.

An end portion in the direction of plate width of the all-solid lithium ion battery 100 is sealed by the outer cladding 103, 104. A positive electrode 110 is configured by the positive electrode-side current collecting layer 101, the current collecting connection layer 105 and the positive electrode plate 106. A negative electrode 120 is configured by the negative electrode-side current collecting layer 102 and the negative electrode layer 108.

### Positive Electrode Plate 106

The positive electrode plate 106 is formed in a plate shape. The positive electrode plate 106 is an example of "a plate-shaped lithium composite oxide" according to the present embodiment. The positive electrode plate 106 is composed of a plurality of bound plurality of primary particles. The microstructure of the positive electrode plate 106 will be described below. It is preferred that the (104) plane for the Miller index hkl of a plurality of crystal surfaces in the positive electrode plate 106 is oriented parallel to the plate face.

There is no particular limitation in relation to the thickness of the positive electrode plate 106 and it may be configured as greater than or equal to 20 µm, preferably greater than or equal to 25 µm, and more preferably greater than or equal to 30 µm. In particular, a configuration in which the thickness of the positive electrode plate 106 is greater than or equal to 35 µm makes it possible to increase the energy density of the all-solid lithium ion battery 100 by ensuring a sufficient active material capacity per unit area. Furthermore although there is no particular limitation on the upper limiting value of the thickness of the positive electrode plate 106, when consideration is made in relation to inhibiting deterioration of battery characteristics (in particular an increase in the resistance value) that results from repetitive charging and discharging, a value of less than 200 µm is preferred, a value of less than or equal to 150 µm is more preferred, a value of less than or equal to 120 µm is still more preferred, and a value of less than or equal to 100 µm is particularly preferred.

When a cross section of the positive electrode plate 106 is observed by scanning electron microscope (SEM), the thickness of the positive electrode plate 106 can be obtained by measurement of the average distance (average value of a distance at 3 arbitrarily selected points) between two plate faces that are observed to be substantially parallel.

In the present embodiment, a direction of thickness is a direction that is parallel to a vertical direction when the positive electrode plate 106 is disposed on a horizontal plane.

### Solid Electrolyte Layer

The solid electrolyte layer 107 is preferably configured by a lithium phosphate oxynitride (LiPON)-based ceramic material that is known as an oxide-based ceramic material. There is no particular limitation on the thickness of the solid electrolyte layer 107, and it is preferably 0.1 to 10 µm, more preferably 0.2 to 8.0 µm, still more preferably 0.3 to 7.0 µm, and particularly preferably 0.5 to 6.0 µm.

A sputtering method is preferably used as a method of film formation that configures a battery by attaching the solid electrolyte layer 107, that is formed from the above ceramic material, to the solid electrolyte-side surface 106a of the positive electrode plate 106. Typically, the thickness of the solid electrolyte layer 107 can be adjusted by controlling the film formation conditions (for example, film formation time) by the sputtering method. The positive electrode plate 106 does not tend to cause a defect in battery function even when the battery is configured by forming a solid electrode layer constituted LiPON on the surface by use of a sputtering method.

LiPON is a group of compounds represented by a composition of Li_{2.9}PO_{3.3}N_{0.46}, and for example, is a group of compounds denoted as LiₐPO_{b}N_{c} (wherein, a is 2 to 4, b is 3 to 5, and c is 0.1 to 0.9). Therefore, the formation of a LiPON-based solid electrolyte layer by sputtering may be performed using a lithium phosphate sintered body target as an Li source, a P source and an O source, and carried out according to known conditions by introducing N₂ as a gas species for the N source. Although there is no particular limitation on the sputtering method, use of an RF magnetron method is preferred. Furthermore, in substitution for the sputtering method, a film formation method such as an MOCVD method, a sol gel method, an aerosol deposition method, a screen printing method or the like may be used.

The solid electrolyte layer 107 may be constituted by an oxide-based ceramic material other than a LiPON-based ceramic material. The oxide-based ceramic material other than a LiPON-based ceramic material includes at least one type selected from the group consisting of a garnet-based ceramic material, a nitride-based ceramic material, a perovskite-based ceramic material, a phosphate-based ceramic material and a zeolite-based ceramic material. An example of the garnet ceramic material includes use of an Li-La-Zr-O-based material (specifically Li₇La₃Zr₂O₁₂, or the like) and an Li-La-Ta-O-based material. An example of the perovskite-based ceramic material includes use of an Li-La-Ti-O-based material (specifically LiLa₁₋ₓTiₓO₃ (0.04 ≦ x ≦ 0.14), or the like). An example of the phosphate-based ceramic material includes use of Li-Al-Ti-P-O, Li-Al-Ge-P-O and Li-Al-Ti-Si-P-O (more specifically Li_{1+x+y}AlₓTi₂₋ₓ Si_{y}P_{3-y}O₁₂ (0≦x≦0.4, 0≦y≦0.6) or the like).

The solid electrolyte layer 107 may also be configured by use of a sulfide based material. The sulfide based material includes use of a material selected from a solid electrolyte based on Li₂S-P₂S₅, LiI-Li₂S-P₂S₅, LiI-Li₂S-B₂S₃, or LiI-Li₂S-SiS₂, Thio-LISICON, and Li₁₀GeP₂S₁₂, or the like. A sulfide based material is comparatively soft, and therefore the battery can be configured by forming a solid electrolyte layer by compaction pressing of a sulfide-based powder onto the surface of the positive electrode plate 106. More specifically, the solid electrolyte layer can be formed by using a binder or the like and stacking and pressing a sulfide-based powder configured in a sheet shape onto the positive electrode plate 106, or by pressing after coating and drying a slurry in which a sulfide-based powder is dispersed onto the positive electrode plate 106.

### Microstructure of Positive Electrode Plate 106

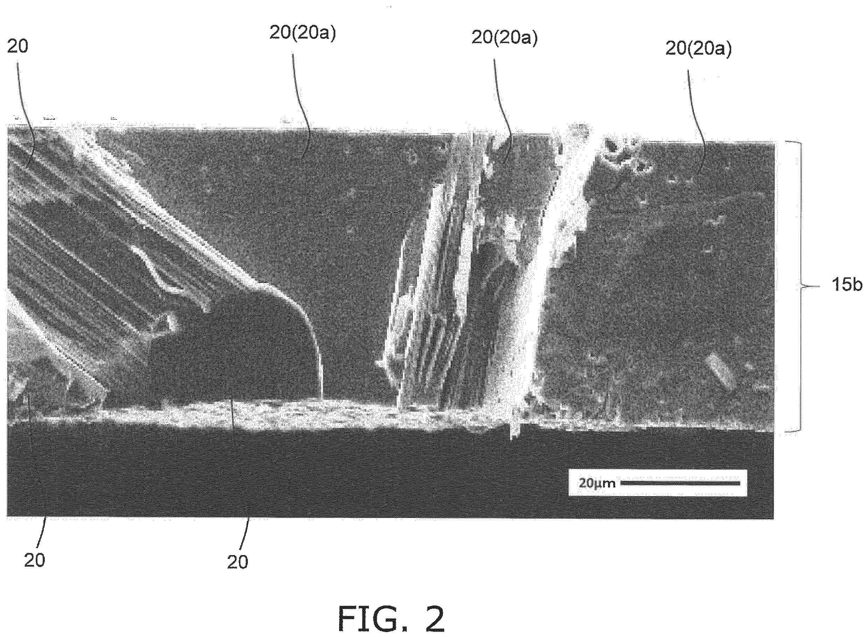

FIG. 2 is an SEM image of a cross section of a positive electrode plate 106. The positive electrode plate 106 is composed of a plurality of bound primary particles 20. The respective plurality of primary particles 20 is constituted by a lithium composite oxide.

A lithium composite oxide is an oxide that is expressed as LiₓMO₂ (wherein 0.05<x<1.10, M is at least one type of transition metal, and M typically includes one or more types of Co, Ni, Mn). A lithium composite oxide typically has a layered rock-salt structure. A layered rock-salt structure is a crystalline structure in which a lithium layer and a transition metal layer other than lithium are alternately layered to sandwich an oxygen layer, that is to say, a crystalline structure in which a transition metal ion layer is alternatively layered with a lithium single layer through an oxide ion (typically, an α-NaFeO2 type structure, that is to say, a structure in which a transition metal and lithium are regularly ordered in an [111] axial direction of a cubic crystal rock-salt structure).

A lithium composite oxide for example includes lithium cobalt oxide, lithium nickelate, lithium manganate, nickel-lithium manganate, lithium- nickel-cobalt oxide, lithium cobalt nickel manganate, and cobalt-lithium manganite, or the like. A lithium composite oxide may include one or more elements of Mg, Al, Si, Ca, Ti, V, Cr, Fe, Cu, Zn, Ga, Ge, Sr, Y, Zr, Nb, Mo, Ag, Sn, Sb, Te, Ba, Bi, W or the like.

As shown in FIG. 2, the plurality of primary particles 20 are mutually bonded and oriented in a plate face direction. The plurality of primary particles 20 may be mutually bonded and oriented in a thickness direction.

In the present embodiment, the average number of primary particles 20 oriented in a thickness direction is less than or equal to 6. In this manner, it is possible to enhance the lithium ion conductivity in the positive electrode plate 106 by reducing the number of grain boundaries between the primary particles 20 in the direction of lithium ion conductivity. As a result, it is possible to enhance the cycle characteristics and rate characteristics of the lithium ion battery 10. In particular when the thickness of the positive electrode plate 106 is greater than or equal to 35 µm and the average number of primary particles 20 oriented in a thickness direction is less than or equal to 6, it is possible to also increase the energy density in addition to the cycle characteristics and rate characteristics.

It is preferred that the average number of primary particles 20 oriented in a thickness direction is less than or equal to 3. In this manner, a further increase is enabled to the lithium ion conductivity in the positive electrode plate 106.

The plurality of primary particles 20 preferably includes primary particles 20a that are exposed on both surfaces in the two respective plate faces of the positive electrode plate 106. Since a portion of the primary particles 20a that are exposed on both surfaces is characterized by a substantial absence of grain boundaries, a further enhancement to lithium ion conductivity is enabled. The numerical ratio of primary particles 20a that are exposed on both surfaces to the plurality of primary particles 20 is preferably greater than or equal to 10%, and more preferably greater than or equal to 25%. When all of the plurality of primary particles 20 is characterized by primary particles 20a that are exposed on both surfaces, the average number of primary particles 20 that are disposed in a thickness direction is 1.

The average number of primary particles 20 disposed in a thickness direction is obtained drawing 5 perpendicular lines parallel at an arbitrary position on an SEM image as illustrated in FIG. 2, and then calculating an arithmetic average of the number of primary particles 20 that overlap with the respective 5 perpendicular lines.

Although there is no particular limitation on the average equivalent circle diameter of the plurality of primary particles 20, it may be configured as greater than or equal to 5 µm and less than or equal to 100 µm, preferably greater than or equal to 10 µm, and more preferably greater than or equal to 20 µm. The average equivalent circle diameter is a value of the arithmetic average of the diameter of 10 circles having the same cross sectional area as the respective 10 primary particles 20.

### Method of Manufacture of Positive Electrode Plate 106

### 1. Preparation of Green Body for Transition Metal Compound Starting Material Powder

Firstly, a starting material powder including a transition metal (Co, Ni, Mn, or the like) compound is prepared. The transition metal compound starting material powder may omit inclusion of a lithium compound. There is no particular limitation in relation to the average particle diameter of the transition metal compound starting material powder, and the starting material powder may be constituted by coarse particles since it is preferred that pores are formed to a suitable degree in an inner portion of the green body as described hereafter. The transition metal compound starting material powder may be pulverized and categorized as required. Furthermore, a plurality of types of transition metal compound starting material powders may be suitably mixed in response to the purpose of the composition. In addition, for the purpose of promoting particle growth, addition is also possible of trace amounts (0.0001 to 1 wt%) of a low melting point oxide such as boron oxide, bismuth oxide, ammonium oxide, or the like, a low melting point salt compound such as sodium chloride, potassium chloride or the like, or a low melting point glass such as borosilicate glass or the like.

Next, a green body for the transition metal compound starting material powder is prepared by a powder compaction molding method using the transition metal compound starting material powder or a doctor blade method using a slurry of the transition metal compound starting material powder. In the following description, an example will be described of a preparation method for a transition metal compound green sheet using a doctor blade method.

Firstly, a transition metal compound starting material powder, a dispersion medium (toluene, isopropanol or the like) a binder (polyvinyl butyral or the like), a plasticizer (DOP: di(2-ethylhexyl) phthalate, or the like), and a dispersing agent are mixed to prepare a mixture.

Then, the prepared mixture is stirred under reduced pressure, degassed and the viscosity is suitably adjusted to thereby prepare a transition metal compound slurry.

Next, the resulting transition metal compound slurry is formed into a sheet shaped configuration on a PET film using a doctor blade method to thereby prepare a transition metal compound green sheet. There is no particular limitation on the thickness of the green sheet, and it is preferred to be less than or equal to 200 µm in order to minimize the average number of primary particles 20 disposed in a thickness direction.

### 2. Firing Step for Green Body of Transition Metal Compound Starting Material Powder

The green body for the transition metal compound starting material powder is placed in a sheath sandwiched by setters. Next, the green body for the transition metal compound starting material powder is fired (500 degrees C to 1000 degrees C, 1 to 10 hours) to thereby prepare a fired body for the transition metal compound.

At that time, a plurality of pores is formed in an inner portion of the fired body of the transition metal compound. The average equivalent circle diameter of the pores may be configured as greater than or equal to 0.1 µm to less than or equal to 10 µm, preferably greater than or equal to 0.2 µm to less than or equal to 8.5 µm, and more preferably greater than or equal to 0.25 µm to less than or equal to 7 µm. The average equivalent circle diameter of the plurality of pores is a value that is calculated as the arithmetic average of the diameter of 10 circles that have the same cross sectional area as 10 pores that have been arbitrarily selected.

The pore diameter of the pores may be adjusted with reference to the firing conditions during the synthesis steps or the particle diameter of the transition metal compound starting material powder. For example, the pore diameter of the pores may be increased by increasing the particle diameter of the transition metal compound starting material powder, the pore diameter of the pores can be reduced by increasing the firing temperature, and the pore diameter of the pores can be reduced by lengthening the firing time.

### 3. Preparation of Lithium Source

The lithium source includes use of a lithium containing green sheet, a lithium containing solution, and a lithium containing powder or the like. In the following description, an example will be given of a method of preparing a green sheet that contains lithium.

Firstly, a starting material powder containing a lithium compound (Li₂CO₃ or the like), a binder (polyvinyl butyral or the like), a plasticizer (DOP, or the like), and a dispersing agent are mixed to prepare a mixture.

Then, the prepared mixture is stirred under reduced pressure, degassed and the viscosity is suitably adjusted to thereby prepare a lithium containing slurry.

Next, the resulting lithium containing slurry is formed into a sheet shaped configuration on a PET film using a doctor blade method to thereby prepare a lithium containing green sheet.

### 4. Synthesis Step of Lithium composite oxide

Firstly, the lithium source is disposed on both principal surfaces of the fired body of the transition metal compound. When using a lithium containing green sheet as the lithium source, the fired body of the transition metal compound is sandwiched by two sheets of the lithium containing green sheet. When using a lithium containing solution as the lithium source, the lithium containing solution is coated onto both principal surfaces of the fired body of the transition metal compound. When using a lithium containing powder as the lithium source, the lithium containing powder is dispersed onto both principal surfaces of the fired body of the transition metal compound.

Next, the lithium composite oxide is synthesized by firing (500 degrees C to 800 degrees C, 1 to 10 hours) the fired body for the transition metal compound with the lithium source disposed thereon to thereby prepare a lithium composite oxide sintered body configured by a plurality of bound primary particles that are constituted by a lithium composite oxide.

At that time, when the molar ratio of the lithium amount contained in the lithium source relative to the transition metal amount contained in the fired body of the transition metal compound is greater than 1.0, that is to say, when the lithium amount is in excess, the lithium may accumulate in the pores of the fired body of the transition metal compound. The lithium that has accumulated in the pores may function as a flux in the coarsening step described below.

### 5. Coarsening Step of Primary Particles

Firstly, the lithium source is disposed on both principal faces of the transition metal compound. The disposition of the lithium source is the same as the synthesis step for the lithium composite oxide as described above.

Next, the lithium composite oxide sintered body with the lithium source disposed thereon is fired (800 degrees C to 950 degrees C, 1 to 20 hours). The firing temperature at that time is higher than the temperature for firing when forming the lithium composite oxide sintered body. Although the mechanism for particle growth is poorly understood, for example, after melted lithium fills the pores of the lithium composite oxide sintered body, lithium is dispersed through the whole of the lithium composite oxide sintered body. As a result, the primary particles undergo a coarsening effect as a result of rapid particle growth since the dispersed lithium functions as a flux. The positive electrode plate 106 is prepared in accordance with the above description.

In the present processing step, the use of a lithium containing powder disposed in the firing vessel as a lithium source is effective in addition to a lithium source that is disposed on both principal surfaces of the fired body of the transition metal compound. The lithium containing powder may be disposed at a position that is removed from the fired body of the transition metal compound.

### Other Embodiments

The present invention is not limited to the above embodiment, and various changes or modifications may be added within a scope that does not depart from the scope of the invention.

In the above embodiment, although an example has been explained in which there is application of the plate-shaped lithium composite oxide according to the present invention to the positive electrode plate 106 of an all-solid lithium ion battery 100, application is also possible of the plate-shaped lithium composite oxide to other battery configurations. For example, the plate-shaped lithium composite oxide according to the present invention can be used in a lithium ion battery using an electrolyte such as an ionic liquid, a polymer electrolyte, a gel electrolyte, or a liquid electrolyte. An ionic liquid is also termed an ordinary temperature molten salt, and is a salt that combines a cation and an anion. The ionic liquid includes an ionic liquid that contains a quaternary ammonium-based cation and an ionic liquid that contains an imidazolium-based cation.

When the plate-shaped lithium composite oxide according to the present invention is applied to an all-solid lithium ion battery 100, it is preferred that the density is greater than or equal to 95% from the point of view of energy density, ion conductivity, and electron conductivity. Furthermore, when the plate-shaped lithium composite oxide according to the present invention is applied to a lithium ion battery having an electrolyte that includes use of an ionic liquid, a polymer electrolyte, a gel electrolyte, or a liquid electrolyte, or the like, pores may be included at 5 to 25 vol%, and the pores are preferably configured as open pores. It is noted that the density and porosity may be calculated using an Archimedes' method.

In the present embodiment, although separate steps being a firing step for the green body of the transition metal compound starting material powder (hereinafter referred to as "first firing step"), a synthesis step for the lithium composite oxide (hereinafter referred to as "second firing step"), and a coarsening step for the primary particles (hereinafter referred to as "third firing step") have been described as separate steps, there is no limitation in that regard.

For example, all of the first to the third firing steps may be executed in a continuous configuration. In that case, since the lithium source cannot be added between the first firing step and the second firing step, or between the second firing step and the third firing step, when executing the first firing step, a lithium source that contains a sufficient amount of lithium may be disposed on both principal surfaces of a green body for the transition metal compound starting material powder. When all of the first to the third firing steps are executed in a continuous configuration, in substitution for the firing of the first firing step and the second firing step at a predetermined temperature for a predetermined time, temperature increase may applied at a relative slow temperature increase rate (for example, 50 degrees C/h) from the first firing step to the third firing step.

The second and the third firing steps only may be executed in a continuous configuration. In this case, since the lithium source cannot be added between the second firing step and the third firing step, when executing the second firing step, a lithium source that contains a sufficient amount of lithium may be disposed on both principal surfaces of the fired body for the transition metal compound.

Furthermore the first and the second firing steps only may be executed in a continuous configuration. In that case, since the lithium source cannot be added between the first firing step and the second firing step, when executing the first firing step, a lithium source may be disposed on both principal surfaces of a green body for the transition metal compound starting material powder. However, since it is possible to add a lithium source between the second firing step and the third firing step, a lithium source may be included in the lithium source used when executing the first firing step so that the molar ratio relative to the transition metal amount is greater than or equal to 1.0. Examples

Although the examples of a lithium ion battery according to the present invention will be described below, the present invention is not thereby limited to the following examples.

### Preparation of Sample No. 1

### 1. Preparation of Co₃O₄ Green Sheet

100 parts by weight of a Co₃O₄ starting material powder (manufactured by Seido Chemical Industry Co., Ltd.), 100 parts by weight of a dispersion medium (toluene:isopropanol = 1: 1), 10 parts by weight of a binder (polyvinyl butyral: No. BM-2, manufactured by Sekisui Chemical Co., Ltd.), 4 parts by weight of a plasticizer (DOP: di(2-ethylhexyl) phthalate manufactured by Kurogane Kasei Co., Ltd.) and 2 parts by weight of a dispersing agent (product name: RHEODOL SP-O30, manufactured by Kao Corporation) were mixed. The volume-based D50 particle diameter of the Co₃O₄ starting material powder is shown in Table 1.

The resulting mixture was stirred under reduced pressure, degassed, and the viscosity was adjusted to 4000cP to thereby prepare a Co₃O₄ slurry. The viscosity was measured with an LVT viscometer manufactured by Brookfield.

Next, the resulting Co₃O₄ slurry was formed into a sheet shaped configuration on a PET film using a doctor blade method to thereby form a Co₃O₄ green sheet. The thickness of the Co₃O₄ green sheet after drying was 55 µm.

### 2. Preparation of Lithium Source

100 parts by weight of an Li₂CO₃ starting material powder (volume-based D50 particle diameter 2.5µm, manufactured by Honjo Chemical Corporation) was mixed with 5 parts by weight of a binder (polyvinyl butyral: No. BM-2, manufactured by Sekisui Chemical Co., Ltd.), 2 parts by weight of a plasticizer (DOP: di(2-ethylhexyl) phthalate manufactured by Kurogane Kasei Co., Ltd.) and 2 parts by weight of a dispersing agent (product name: RHEODOL SP-O30, manufactured by Kao Corporation).

The mixture was stirred under reduced pressure, degassed, and the viscosity was adjusted to 4000cP to thereby prepare an Li₂CO₃ slurry. The viscosity was measured with an LVT viscometer manufactured by Brookfield.

As described above, the resulting Li₂CO₃ slurry was formed into a sheet shaped configuration on a PET film using a doctor blade method to thereby form an Li₂CO₃ green sheet. The thickness of the Li₂CO₃ green sheet after drying was 55 µm.

### 3. Firing Step for Co₃O₄ Green Sheet (First Firing Step)

A Co₃O₄ green sheet was peeled from the PET film, cut using a cutter into 50 mm squares, and placed on the center of a zirconia setter (dimensions: 90 mm square, height 1 mm). Then, a zirconia setter was also placed onto the Co₃O₄ green sheet.

Next, the Co₃O₄ green sheet that was sandwiched by the zirconia setters was placed into a 120 mm square alumina sheath. At that time, the alumina sheath was not sealed but was covered to create an opening of a 0.5 mm gap.

Then, the temperature was increased to 800 degrees C at a temperature increase rate of 200 degrees C/h and fired for 5 hours to thereby form a Co₃O₄ fired body. Then, after allowing the temperature to fall back to room temperature, the Co₃O₄ fired body was removed from the alumina sheath.

### 4. Synthesis Step for Lithium composite oxide (Second Firing Step)

Firstly, the Co₃O₄ fired body was sandwiched by two Li₂CO₃ green sheets. The molar ratio of the Li amount contained in the Li₂CO₃ green sheets relative to the Co amount contained in the Co₃O₄ fired body was configured as 1.0. Then, the Co₃O₄ fired body sandwiched by two Li₂CO₃ green sheets was sandwiched by the zirconia setters and placed in a 120 mm square alumina sheath (manufactured by Nikkato Corporation). At that time, the alumina sheath was not sealed but was covered to create an open gap of 0.5 mm.

Then, the temperature was increased to 800 degrees C at a temperature increase rate of 200 degrees C/h and the Co₃O₄ fired body fired for 5 hours to thereby synthesize an LiCoO₂ sintered body which is composed of a plurality of bound primary particles that are constituted by LiCoO₂. Then, after allowing the temperature to fall back to room temperature, the LiCoO₂ sintered body was removed from the alumina sheath.

Then, the LiCoO₂ sintered body was polished using CP polishing (IB15000CP manufactured by JEOL Ltd.) to thereby expose a cross section. Next, an SEM (1000 times, field of vision 125 µm x 125 µm) image of the exposed cross section was acquired and an average equivalent circle diameter of the pores and the porosity were measured by image analysis of the SEM image. The porosity is the ratio of the total area of the pores to the cross sectional area of the LiCoO₂ sintered body. The average pore diameter is the average equivalent circle diameter of 10 pores that have been arbitrarily selected. The measurement results for the porosity and the average equivalent circle diameter of the pores are shown in Table 1.

### 5. Coarsening of Primary Particles (Third Firing Step)

Firstly, the LiCoO₂ sintered body was sandwiched again by Li₂CO₃ green sheets, and disposed again in an alumina sheath. The molar ratio of the Li amount contained in the Li₂CO₃ green sheets relative to the Co amount contained in the LiCoO₂ sintered body was configured as 2.50. Table 1 illustrates the molar ratio of the total Li amount contained in the lithium source used in the second firing step and third firing step to the Co amount.

Then, the temperature was increased to 900 degrees C at a temperature increase rate of 200 degrees C/h and the LiCoO₂ sintered body was fired for 5 hours to thereby form plate-shaped LiCoO₂ (plate-shaped lithium composite oxide). Thereafter, the temperature was allowed to fall back to room temperature and the plate-shaped LiCoO₂ was removed from the alumina sheath.

Then, 5 vertical lines were drawn at an arbitrary position on an SEM (1000 times, field of vision 125 µm x 125 µm) image of a fracture surface of the plate-shaped LiCoO₂ to thereby calculate an arithmetic average for the number of primary particles that overlap the respective 5 vertical lines as a calculation for the average number of primary particles that are disposed in a thickness direction. The calculation results for the average number of primary particles are shown in Table 1.

### Preparation of Sample No. 2, 5 and 8 to 11

As described below, Sample No. 2, 5 and 8 to 11 were prepared in the same manner as Sample No. 1 with the exception that the synthesis step for the lithium composite oxide (second firing step) was executed continuously with the step for coarsening of the primary particles (third firing step).

### 1. Firing Step for Co₃O₄ Green Sheet (First Firing Step)

In the same manner as Sample No. 1, the temperature of a Co₃O₄ green sheet was increased to the temperature shown in Table 1 at a temperature increase rate of 200 degrees C/h and fired for 5 hours to thereby form a Co₃O₄ fired body. Then, after allowing the temperature to fall back to room temperature, the Co₃O₄ fired body was removed from the alumina sheath.

Then as shown in Table 1, the average equivalent circle diameter of the pores and the porosity of the Co₃O₄ fired body were measured using the same method as the LiCoO₂ sintered body in Sample No. 1.

### 2. Synthesis Step for Lithium composite oxide (Second Firing Step) and Coarsening of Primary Particles (Third Firing Step)

In the same manner as Sample No. 1, a Co₃O₄ fired body was sandwiched by two Li₂CO₃ green sheets. Then, the Co₃O₄ fired body that is sandwiched by two Li₂CO₃ green sheets was sandwiched by the zirconia setters and placed in an alumina sheath. The molar ratio of the Li amount contained in the Li₂CO₃ green sheets relative to the Co amount contained in the Co₃O₄ fired body is disclosed in Table 1. Furthermore, in Sample No. 5 and 8, an Li₂CO₃ powder is introduced into the alumina sheath as an atmosphere creating powder. The introduced amount of the Li₂CO₃ powder is shown in Table 1.

Next, the temperature was increased to 800 degrees C at a temperature increase rate of 200 degrees C/h and the Co₃O₄ fired body fired for 5 hours to thereby synthesize an LiCoO₂ sintered body. Then without allowing a temperature decrease, the temperature was increased to 900 degrees C at a temperature increase rate of 200 degrees C/h and firing was performed for the firing times shown in Table 1 to thereby form plate-shaped LiCoO₂. Thereafter, the temperature was allowed to fall back to room temperature and the plate-shaped LiCoO₂ was removed from the alumina sheath.

Then, an SEM (1000 times, field of vision 125 µm x 125 µm) image of a fracture surface of the plate-shaped LiCoO₂ was observed to thereby calculate the average number of primary particles disposed in a thickness direction.

### Preparation of Sample No. 3

As described below, Sample No. 3 was prepared in the same manner as Sample No. 1 with the exception that the firing step for Co₃O₄ green sheet (first firing step) was executed continuously with the synthesis step for the lithium composite oxide (second firing step).

### 1. Firing Step for Co₃O₄ Green Sheet (First Firing Step) and Synthesis Step for Lithium composite oxide (Second Firing Step)

Firstly, the Co₃O₄ green sheet was sandwiched by two Li₂CO₃ green sheets. The molar ratio of the Li amount contained in the Li₂CO₃ green sheet relative to the Co amount contained in the Co₃O₄ green sheet was configured to 1.0. The Co₃O₄ fired body sandwiched by the two Li₂CO₃ green sheets was sandwiched by the zirconia setters and placed in an alumina sheath.

Next, the temperature was increased to 500 degrees C at a temperature increase rate of 200 degrees C/h and the Co₃O₄ green sheet was fired for 5 hours to thereby form a Co₃O₄ fired body. Then without allowing a temperature decrease, the temperature was increased to 800 degrees C at a temperature increase rate of 200 degrees C/h and firing was performed for 5 hours to thereby form an LiCoO₂ sintered body. Thereafter, the temperature was allowed to fall back to room temperature and the LiCoO₂ sintered body was removed from the alumina sheath.

Then as shown in Table 1, the average equivalent circle diameter of the pores and the porosity of the LiCoO₂ sintered body were measured using the same method as Sample No. 1.

### 2. Coarsening of Primary Particles (Third Firing Step)

Firstly, the LiCoO₂ sintered body was sandwiched again by Li₂CO₃ green sheets, and disposed again in an alumina sheath. The molar ratio of the Li amount contained in the Li₂CO₃ green sheets relative to the Co amount contained in the LiCoO₂ sintered body was configured as 2.50. Table 1 illustrates the molar ratio of the total Li amount contained in the lithium source used in the second firing step and third firing step to the Co amount.

Then, the temperature was increased to 900 degrees C at a temperature increase rate of 200 degrees C/h and the LiCoO₂ sintered body fired for 5 hours to thereby form plate-shaped LiCoO₂ (plate-shaped complex oxide). Thereafter, the temperature was allowed to fall back to room temperature and the plate-shaped LiCoO₂ was removed from the alumina sheath.

Then, an SEM (1000 times, field of vision 125 µm x 125 µm) image of a fracture surface of the plate-shaped LiCoO₂ was observed to thereby calculate the average number of primary particles disposed in a thickness direction.

### Preparation of Sample No. 4 and 7

As described below, Sample No. 4 and 7 were prepared in the same manner as Sample No. 1 with the exception that the firing step for Co₃O₄ green sheet (first firing Step), the synthesis step for the lithium composite oxide (second firing step) and the coarsening of primary particles (third firing step) were executed continuously.

Firstly, the Co₃O₄ green sheet was sandwiched by two Li₂CO₃ green sheets. The molar ratio of the Li amount contained in the Li₂CO₃ green sheets relative to the Co amount contained in the Co₃O₄ green sheet was configured to the values shown in Table 1. The Co₃O₄ fired body that is sandwiched by the two Li₂CO₃ green sheets was sandwiched by the zirconia setters and placed in an alumina sheath.

Next, the temperature was increased to 500 degrees C at a temperature increase rate of 200 degrees C/h and the Co₃O₄ green sheet fired for 5 hours to thereby form a Co₃O₄ fired body. Then without allowing a temperature decrease, the temperature was increased to 800 degrees C at a temperature increase rate of 200 degrees C/h and firing was performed for the 5 hours to thereby form an LiCoO₂ sintered body. Furthermore, in that configuration and without allowing a temperature decrease, the temperature was increased to 900 degrees C at a temperature increase rate of 200 degrees C/h and firing was performed for 5 hours to thereby form plate-shaped LiCoO₂ (plate-shaped lithium composite oxide). Thereafter, the temperature was allowed to fall back to room temperature and the plate-shaped LiCoO₂ was removed from the alumina sheath.

Then, an SEM (1000 times, field of vision 125 µm x 125 µm) image of a fracture surface of the plate-shaped LiCoO₂ was observed to thereby calculate the average number of primary particles disposed in a thickness direction.

### Preparation of Sample No. 6

As described below, Sample No. 6 was prepared in the same manner as Sample No. 1 with the exception that the firing step for Co₃O₄ green sheet (first firing step), the synthesis step for the lithium composite oxide (second firing step) and the coarsening of primary particles (third firing step) were executed continuously.

Firstly, the Co₃O₄ green sheet was sandwiched by two Li₂CO₃ green sheets. The molar ratio of the Li amount contained in the Li₂CO₃ green sheet relative to the Co amount contained in the Co₃O₄ green sheet was configured to take a value of 3.0. The Co₃O₄ fired body sandwiched by the two Li₂CO₃ green sheets was sandwiched by the zirconia setters and placed in an alumina sheath.

Next, the temperature of the Co₃O₄ green sheet was increased to 900 degrees C at a temperature increase rate of 50 degrees C/h. In this manner, after formation of the Co₃O₄ fired body from the Co₃O₄ green sheet, the LiCoO₂ sintered body was formed without modification from the Co₃O₄ fired body.

After the temperature is increased to 900 degrees C, without allowing a temperature decrease, firing was performed for 5 hours at 900 degrees C to thereby form plate-shaped LiCoO₂ (plate-shaped lithium composite oxide) from the LiCoO₂ sintered body. Thereafter, the temperature was allowed to fall back to room temperature and the plate-shaped LiCoO₂ was removed from the alumina sheath.

Then, an SEM (1000 times, field of vision 125 µm x 125 µm) image of a fracture surface of the plate-shaped LiCoO₂ was observed to thereby calculate the average number of primary particles disposed in a thickness direction.

### Preparation of Coin Cell-Type Battery

A coin cell-type battery was prepared as described below in order to evaluate rate characteristics and cycle characteristics.

Firstly, after cutting the respective plate-shaped LiCoO₂ of Sample No. 1 to 11 (referred to below as "positive electrode plate") into 1 cm squares using a cutter knife, the cut-out positive electrode plates were fixed to a stainless steel current collecting plate using an epoxy-based conductive adhesive to thereby prepare a positive electrode.

Then, the positive electrode, separator and negative electrode that is formed form an Li metal plate was disposed in sequence to thereby prepare an assembly. Next, the assembly is filled with electrolyte solution to thereby prepare a coin cell-type battery. A configuration in which LiPF₆ was dissolved in an organic solvent in which ethylene carbonate (EC) and diethylene carbonate (DEC) were mixed in a volumetric ratio to thereby form a concentration of 1 mol/L was used as the electrolyte solution.

### Rate Characteristics

Then, a charging/discharging cycle (1) to (6) of the coin cell-type battery was repeated in 2 cycles at 25 degrees C.

(1) Fixed current charging was performed until a battery voltage at a current value of 0.1 C rate reached 4.2V.
(2) After fixed voltage charging was performed until the current value fell to 1/20 under a current condition at which the battery voltage was maintained as 4.2V, suspension of operation was enforced for 10 minutes.
(3) After fixed current discharging was performed until a battery voltage at a current value of 0.1 C rate reached 3.0V, suspension of operation was enforced for 10 minutes.
(4) Fixed current charging was performed until a battery voltage at a current value of 0.1 C rate reached 4.2V.
(5) After fixed voltage charging was performed until the current value fell to 1/20 under a current condition at which the battery voltage was maintained as 4.2V, suspension of operation was enforced for 10 minutes.
(6) After fixed current discharging was performed until a battery voltage at a current value of 1C rate reached 3.0V, suspension of operation was enforced for 10 minutes.

Then the 1C discharge capacity after 2 cycles was divided by the 0.1C discharge capacity after the same 2 cycles to thereby calculate a rate capacity maintenance rate. The resulting rate capacity maintenance rate of each sample is shown in Table 1.

### Cycle Characteristics

Next, a charging/discharging cycle (11) to (16) of the coin cell-type battery was repeated in 2 cycles at 25 degrees C.

(11) Fixed current charging was performed until a battery voltage at a current value of 0.2 C rate reached 4.2V.
(12) After fixed voltage charging was performed until the current value fell to 1/20 under a current condition at which the battery voltage was maintained as 4.2V, suspension of operation was enforced for 10 minutes.
(13) After fixed current discharging was performed until a battery voltage at a current value of 0.2 C rate reached 3.0V, suspension of operation was enforced for 10 minutes.
(14) Fixed current charging was performed until a battery voltage at a current value of 0.2 C rate reached 4.2V.
(15) After fixed voltage charging was performed until the current value fell to 1/20 under a current condition at which the battery voltage was maintained as 4.2V, suspension of operation was enforced for 10 minutes.
(16) After fixed current discharging was performed until a battery voltage at a current value of 0.2C rate reached 3.0V, suspension of operation was enforced for 10 minutes.

Then, after repeating 30 cycles, a ratio of the discharge capacity after 1 cycle and the discharge capacity after 30 cycles was taken to be a cycle capacity maintenance rate. The resulting cycle capacity maintenance rate of each sample is shown in Table 1.

**Table 1**

| Sample No. | Particle Diameter of Co₃O₄ Starting Material Powder (*µ*m) | Firing Step for Green Body of Transition Metal Compound Starting Material Powder (First Firing Step) | | Synthesis Step for Lithium Complex Oxide (Second Firing Step) | | Coarsening of Primary Particles (Third Firing Step) | | | | Average Porosity (%) | Average Equivalent Circle Diameter of Pores (*µ*m) | Total Li Amount/ Co Amount | Rate Capacity Maintenance Rate (%) | Cycle Capacity Maintenance Rate (%) |
|---|---|---|---|---|---|---|---|---|---|---|---|---|---|---|
| | | Firing Temp. | Firing Time | Firing Temp. | Firing Time | Firing Temp. | Firing Time | Atmosphere Creating Powder | Particle Number | | | | | |
| 1 | 1.0 | 800°C | 5 hours | 800°C | 5 hours | 900°C | 5 hours | - | 3 | 5 | 2.0 | 3.5 | 83 | 90 |
| 2 | 1.0 | 800°C | 5 hours | 800°C | 5 hours | 900°C | 5 hours | - | 3 | 20 | 3.0 | 3.0 | 83 | 90 |
| 3 | 1.0 | 500°C | 5 hours | 800°C | 5 hours | 900°C | 5 hours | - | 3 | 40 | 1.0 | 3.5 | 83 | 90 |
| 4 | 1.0 | 500°C | 5 hours | 800°C | 5 hours | 900°C | 5 hours | - | 4 | - | -- | 3.0 | 80 | 90 |
| 5 | 1.0 | 800°C | 5 hours | 800°C | 5 hours | 900°C | 5 hours | 0.5g | 3 | 20 | 3.0 | 1.8 | 84 | 90 |
| 6 | 1.0 | Temp. increase rate till coarsening of primary particles: 50°C/h | | | | 900°C | 5 hours | - | 3 | - | - | 3.0 | 83 | 90 |
| 7 | 1.0 | 500°C | 5 hours | 800°C | 5 hours | 900°C | 5 hours | - | 6 | - | - | 2.0 | 75 | 85 |
| 8 | 1.0 | 800°C | 5 hours | 800°C | 5 hours | 900°C | 20 hours | 0.5g | 2 | 20 | 3.0 | 3.0 | 90 | 90 |
| 9 | 2.5 | 800°C | 5 hours | 800°C | 5 hours | 900°C | 5 hours | - | 40 | 20 | 7.5 | 3.0 | 25 | 45 |
| 10 | 1.0 | 1300°C | 5 hours | 800°C | 5 hours | 900°C | 5 hours | - | 35 | 0 | - | 3.0 | 20 | 30 |
| 11 | 1.0 | 800°C | 5 hours | 800°C | 5 hours | 900°C | 5 hours | - | 40 | 20 | 3.0 | 1.2 | 25 | 45 |

As shown in Table 1, the rate capacity maintenance rate was improved in Sample No. 1 to 8 in which the average number of primary particles disposed in a thickness direction is less than or equal to 6. There was a further improvement to the rate capacity maintenance rate in Sample No. 1 to 3, 5, 6 and 8 in which the average number of primary particles disposed in a thickness direction is less than or equal to 3. This feature is due to the fact that lithium ion conductivity in the lithium composite oxide sintered plate is enhanced by reducing the number grain boundaries between the primary particles in the direction of lithium ion conductivity.

Superior coarsening of the primary particles was confirmed even when a lithium source was supplied in any of the steps in the first firing step, the second firing step and the third firing step.

Furthermore, as shown in Sample No. 5, it was confirmed that use of a Li-containing powder as an atmosphere creating powder was effective in coarsening of the primary particles.

Furthermore, the cycle capacity maintenance rate was also enhanced in Sample No. 1 to 8 in which the rate capacity maintenance rate was enhanced. This feature is due to the fact that there was a reduction in stress produced in an inner portion of the lithium composite oxide sintered plate as a result of an enhancement to the rate capacity maintenance rate.

### Industrial Applicability

The plate-shaped lithium composite oxide and method for manufacturing same according to the present invention enables an enhancement to the rate characteristics of a lithium ion battery and therefore the present invention finds application in the field of lithium ion batteries.

### Reference Signs List

- 11: BATTERY CASE
- 12: SEPARATOR
- 13: ELECTROLYTE
- 14: NEGATIVE ELECTRODE
- 15: POSTIVE ELECTRODE
- 15a: POSTIVE ELECTRODE CURRENT COLLECTOR
- 15b: POSITIVE ELECTRODE ACTIVE SUBSTANCE LAYER (LITHIUM COMPOSITE OXIDE SINTERED PLATE)
- 15c: CONDUCTIVE BONDING LAYER
- 20: PRIMARY PARTICLE
- 20a: TWO-SIDE EXPOSED PRIMARY PARTICLE

## Claims

1. A plate-shaped lithium composite oxide for use of a positive electrode of a lithium ion battery, the plate-shaped lithium composite oxide is composed of a plurality of bound primary particles respectively constituted by a lithium composite oxide having a layered rock-salt structure, wherein:
an average number of the primary particles disposed in a thickness direction perpendicular to a plate face is less than or equal to 6.

2. The plate-shaped lithium composite oxide according to claim 1, wherein
an average equivalent circle diameter of the plurality of bound primary particles is greater than or equal to 10 µm.

3. The plate-shaped lithium composite oxide according to claim 1 or claim 2, wherein
a thickness in the thickness direction is greater than or equal to 35 µm.

4. The plate-shaped lithium composite oxide according to any one of claims 1 to 3, wherein
the average number of the bound primary particles disposed in the thickness direction is less than or equal to 3.

5. A method for manufacturing of a plate-shaped lithium composite oxide comprising:
forming a transition metal compound green body constituted by a transition metal compound and having a plurality of pores in an inner portion,
disposing a lithium source on a principal face of the transition metal compound green body,
firing the transition metal compound green body with the lithium source disposed thereon to form a lithium composite oxide sintered body which is composed of a plurality of bound primary particles respectively constituted by a lithium composite oxide having a layered rock-salt structure, and filling lithium into the plurality of pores, and
coarsening the plurality of bound primary particles by firing the lithium composite oxide sintered body.
